# EUROPEAN PATENT APPLICATION

(11) **EP 1 471 284 A1**
(43) Date of publication of application: **27.10.2004**
(21) Application number: 03425251.0
(22) Date of filing: 22.04.2003
(51) Int. Cl.: F16H 7/08

(54) **Check valve for hydraulic chain tensioner**

(71) Applicant: Morse Tec Europe S.r.l., 20043 Arcore, Milano (IT)
(72) Inventor: Clayton, Philippe Alain, 20050 Lesmo (Milano) (IT)
(74) Representative: Coggi, Giorgio

(57) **Abstract**

A check valve (19) suitable to equip a hydraulic tensioner (10) for chains - in particular for the drive transmission chain of an engine - is described which comprises a first ball (20) which, under the action of a spring (21), closes an opening (18) which connects the hydraulic tensioner (10) to a pressurised fluid supply; the spring (21) is placed between the first ball (20) and a second ball (22), having a diameter greater than that of the first ball (20), housed - together with the first ball (20) and the spring (21) ― in a substantially cylindrical body (23) and blocked therein.

The substantially cylindrical body (23) comprises a cylindrical base (24) wherein the first ball (20) is housed, and a side wall which can be a continuous surface or can be made up of a plurality of sectors (25) evenly distributed along the base (24).

A hydraulic tensioner comprising a check valve according to the present invention also forms subject matter of the present invention.

## Description

The present invention refers to devices for tensioning drive transmission means, such as chains.

In particular, reference will be made to a check valve suitable for equipping a hydraulic tensioner for chains, that is, a device for tensioning drive transmission means, in particular chain-type drive transmission means for motor vehicles.

A timing system of an internal combustion engine can be controlled by means of a chain drive, wherein the chain is wound on one or more sprockets, one of which is a drive sprocket and takes its drive (even indirectly) from the drive shaft to transmit it to one or more shafts.
Since for reasons of adjustment, of wear of materials and/or of taking up of play it is often necessary to compensate for a certain slackness of the chain, it is known to the art to use shoe tensioning devices, wherein the shoe is biased with an adjustable force against a branch of the chain.
Various means of biasing the tensioning shoe against the chain are known to the art.

The most frequently used means are hydraulic tensioners wherein a fixed member (generally a cylinder) is mounted on the engine block and a movable member (generally a piston, movable inside the cylinder) is slidable with respect to the fixed member and acts against the shoe placed in contact with the chain, to tension it.

In these tensioning devices the piston is pushed outside the cylinder, towards the shoe disposed against a branch of the chain, by the combined action of a spring and of a pressurised fluid (generally oil) fed into the chamber of the cylinder through a check valve.

Any slackening of the chain due to heating, to wear and to time is compensated by protrusion of the piston from the cylinder under the action of said biasing means.

Furthermore, in an internal combustion engine, the tensioning stress to which the timing chain is subjected is not uniform but has a maximum at each ignition phase of the engine whilst it has a minimum between two consecutive ignition phases.

In order to keep the timing chain tension (substantially) constant during running of the engine, it is necessary - or at least highly advisable - for a small part of the pressurized fluid present in the cylinder chamber to be able to flow out through a calibrated duct - or in another manner, not described herein because it is per se known and in any case outside the present invention - into the fluid feed circuit when the tensioning stress of the chain is at a maximum and the valve is therefore closed and that it should be replenished through the check valve when the tensioning stress of the chain is at a minimum.

Consequently, the check valve must perform opening/closing cycles with a very high frequency (at least four times the number of revolutions per minute of the motor, that is at least 10-12,000 cycles per minute), which means that said valve must be able to perform an opening/closing cycle in a few tens of microseconds and is (or can be) subject, therefore, to high or in any case not negligible mechanical stress.

In the art are known check valves comprising a ball, which, under the action of a spring, closes an aperture, which connects the hydraulic tensioner to a pressurized fluid supply.

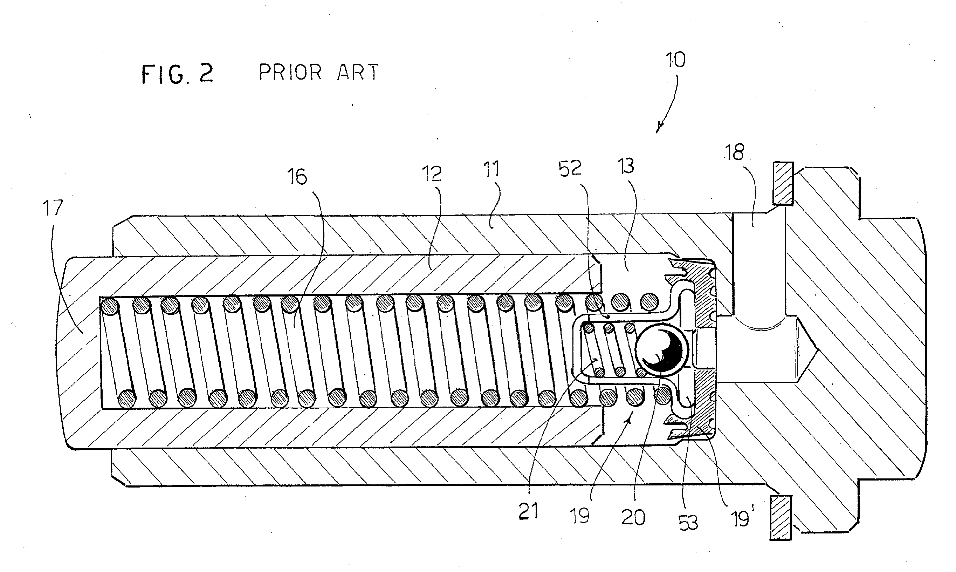

According to one embodiment of said known valves, denoted in Figure 2 by reference numeral 19, the ball and the spring are housed in a shell, often made of sheet metal, which is fixed to a plate - wherein the hole closed by the ball is made - by folding the edges thereof practically at right angles around the plate. Alternatively, the shell can be made from a bar by turning or by any other known manufacturing method suitable for the purpose.

According to a further embodiment of said valves of the prior art, the ball and the spring are housed in a cylindrical body, integral with the plate wherein the hole closed by the ball is made, whercto a closing cover is fixed by folding the edges of the cylindrical body practically at right angles around the cover.

The above described check valves of the prior art present at least the following drawbacks:
- because of the working tolerances, it is not possible to limit the stroke of the ball in a precise, uniform manner, as would be necessary to allow the check valve to perform the opening/closing cycles correctly with a very high frequency: this uncertainty in the stroke of the ball can considerably impair the operation and reliability of the check valve;
- during the above mentioned opening/closing cycles of the valve, the oil pressure and the impact of the ball stress the shell with a very high frequency: these repeated and frequent stresses tend to concentrate in the areas wherein the edges of the shell (or of the closure cover if the shell has been made by turning) have been folded practically at a right angle, areas which - even after a very high number of cycles - can break, putting the check valve and, consequently, the tensioning device out of use with at least potentially very serious consequences for the operation and the life of the engine.

The object of the invention is to overcome these drawbacks, providing a strong check valve with a practically unlimited life.

Another object of the invention is that of providing a check valve that can be made in a cheaper and/or faster manner than valves of the prior art, thus reducing manufacturing costs.

These objects are achieved by the check valve for a chain tensioner made according to the invention, which presents the characteristics of appended independent claim 1. Preferred embodiments of the invention are apparent from the dependent claims.

Substantially, according to the invention, a check valve comprises (besides the first ball which, under the action of a spring, closes the opening that connects the hydraulic tensioner to a pressurised fluid supply and to the spring) a second ball, preferably with a larger diameter than the first ball, which is housed (together with the first ball and with the spring) in a substantially cylindrical body and blocked therein by interference and/or by folding the edges of the substantially cylindrical body over the second ball; the spring is placed between the first ball and the second ball.

The substantially cylindrical body comprises a cylindrical base - wherein the first ball is housed - and a side surface, which can be a continuous surface or can consist of a plurality of sectors evenly distributed along the cylindrical base.

A hydraulic tensioner comprising a check valve according to the present invention also forms subject matter of the present invention.

Further characteristics of the invention will be made clearer by the detailed description that follows, referring to purely exemplary and therefore non-limiting embodiments thereof, illustrated in the appended drawings, in which:
- Figure 1 is a diagrammatic illustration of a chain drive, per se known, provided with a tensioning device;
- Figure 2 is a diagrammatic axial section of the tensioner of Figure 1;
- Figure 3a is a perspective view of a first embodiment of the valve according to the invention during assembly;
- Figure 3b is a sectional view of the valve of Figure 3a, taken along the plane of section III-III of Figure 3a;
- Figure 4a is a perspective view of the valve of Figure 3a assembled;
- Figure 4b is a sectional view of the valve of Figure 4a, taken along the plane of section IV-IV of Figure 4a;
- Figure 5a is a perspective view of a second embodiment of a valve according to the invention, during assembly;
- Figure 5b is a sectional view of the valve of Figure 5a, taken along the plane of section V-V of Figure 5a;
- Figure 6a is a perspective view of the valve of Figure 5a assembled;
- Figure 6b is a sectional view of the valve of Figure 6a, taken along the plane of section VI-VI of Figure 6a.

In the appended figures, corresponding elements are denoted by the same reference numerals.

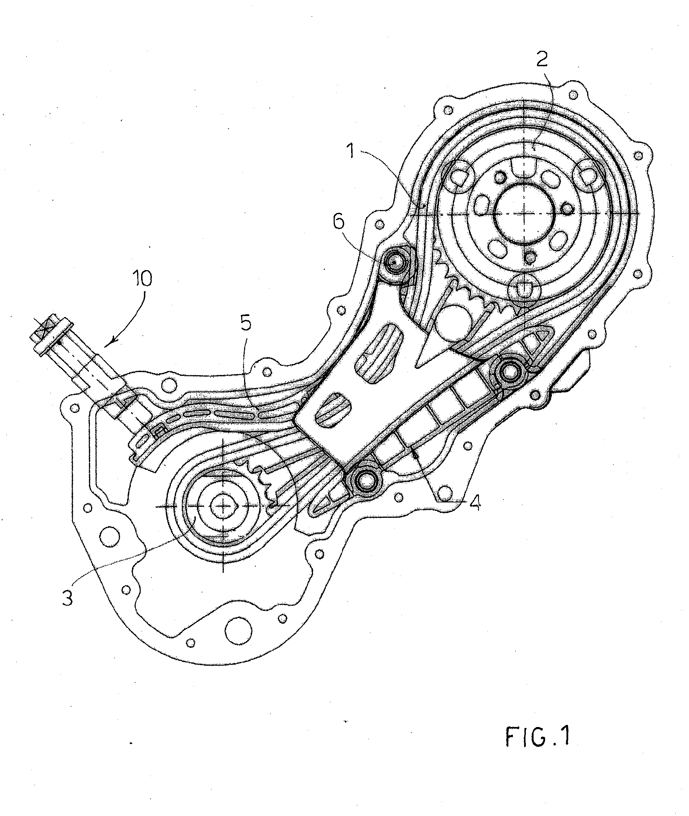

Figure 1 diagrammatically illustrates a chain drive, per se known, whereto a hydraulic tensioner comprising a check valve made according to the invention can be applied.

In particular a drive wheel 2 and a driven wheel 3 are shown, whereon is wound a chain 1, whereof the taught branch (the bottom one in the figure) is guided by a suitable guide 4 and whereof the slack branch (the top one in the figure) is tensioned by means of a shoe 5, oscillating around a pin 6, which is biased against the corresponding branch of the chain by a tensioning device 10.

Figure 2 shows in section a tensioning device 10 of the prior art which comprises a body or cylinder 11 and a piston 12 housed slidably in a cylindrical chamber 13 of the cylinder 11; the piston 12 is hollow on the inside and houses a thrust spring 16 acting between the bottom of the cylindrical chamber 13 and the head end 17 of the piston 12.

The cylindrical chamber 13 is in communication with a supply circuit for the pressurised fluid (generally oil) through an opening 18 and a check valve 19, comprising a ball 20 and a spring 21, which is normally equipped with a sealing disc 19' which allows a calibrated return of the fluid into the supply circuit.

The combined action of the spring 16 and the pressurised fluid in the chamber 13 tends to push the piston 12 out of the cylinder 11, so that the piston 12 acts with its head end 17 against the shoe 5 thus keeping the chain 1 tensioned.

The check valve indicated diagrammatically in Figure 2 is a valve of a known type: the ball 20 and the spring 21 are housed in a shell 52, preferably made of sheet metal, which is fixed to a plate 53 - wherein the hole closed by the ball 20 is made - by folding the edges thereof practically at right angles around the plate 53.

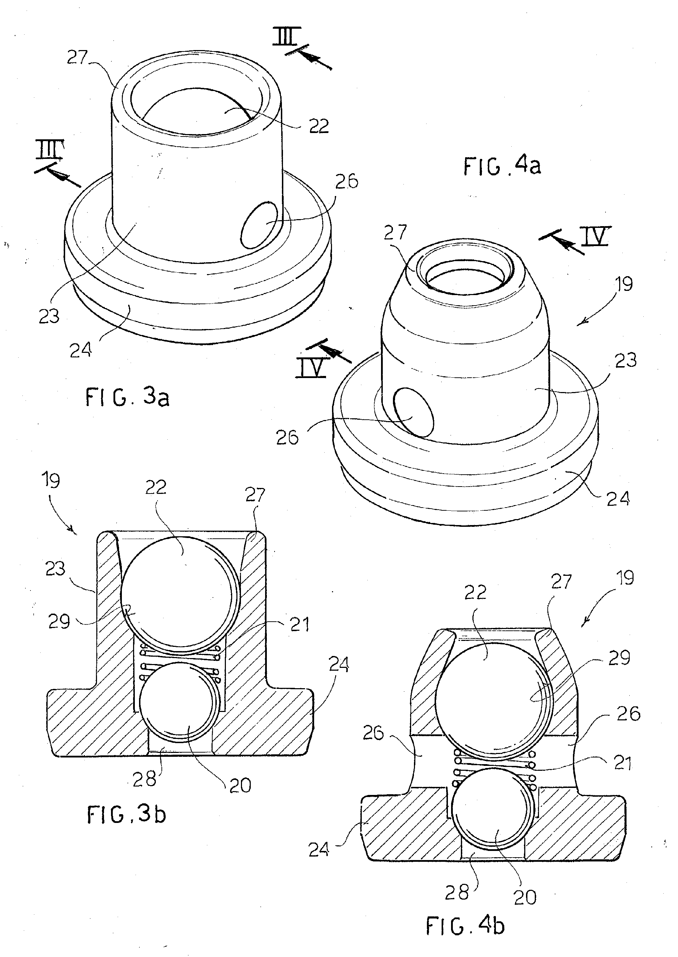

Figure 3a is a perspective view of a first embodiment of a check valve 19 made according to the invention, during assembly; Figure 3b is a sectional view of the valve of Figure 3a, taken along the plane of section III-III of Figure 3a.

In Figure 3 there can be seen the first ball 20 which - under the action of the spring 21 - closes the aperture 28 which connects the valve 19 of the hydraulic tensioner 10 to the supply circuit of the pressurised fluid; a second ball 22, with a greater diameter than that of the first ball 20; the spring 21 placed between the first and the second ball (20, 22) and a substantially cylindrical body 23 wherein the first and the second ball (20, 22) and the spring 21 are housed.

The second ball 22 preferably has a greater diameter than that of the first ball 20, facilitating assembly of the valve 19, but without departing from the scope of the invention the two balls (20, 22) can have the same diameter.

The substantially cylindrical body 23 comprises a cylindrical base 24 wherein the first ball 20 is housed and a side wall, consisting of a continuous wall, wherein the spring 21 and the second ball 22 are housed.

Also visible in Figure 3a is a hole 26 which allows the pressurised fluid, entering through the aperture 28, to flow out into the inner cavity of the hydraulic tensioner 10.

To assemble the valve 19 the first ball 20, the spring 21 and the second ball 22 are inserted into the body 23, in this order.

The second ball 22 is preferably press-inserted into a seat 29 formed in the inner surface of the side wall of the body 23.

The second ball 22, thus blocked by interference, transfers at least part of the stress received from the spring 21 to the side surface of the body 23 and limits the stroke of the first ball 21 to a pre-set value, optimal for correct functioning of the valve 19, thus overcoming one of the above mentioned limitations of the valves of the prior art.

Figure 4a is a perspective view of the valve of Figure 3a assembled by folding the edges 27 of the substantially cylindrical body 23 over the second ball 22 to block the second ball and, consequently, the first ball 20 and the spring 21 in the substantially cylindrical body 23.

Figure 4b is a sectional view of the valve of Figure 4a, taken along the plane of section IV-IV of Figure 4a; from said figure it can be seen that the edges 27 of the body 23, folded over the second ball 22, have a relatively large radius of curvature.

Unlike the valves of the prior art described previously, a check valve 19 made according to the invention does not have the practically right-angled folds which, as previously stated, form preferential breaking points of the valves of the prior art.

A valve 19 made according to the invention therefore has a practically unlimited "useful life" - in any case much longer than that of valves of the prior art - also bearing in mind that the balls 20 and 22, preferably made of ball-bearing steel, are practically immune to wear.

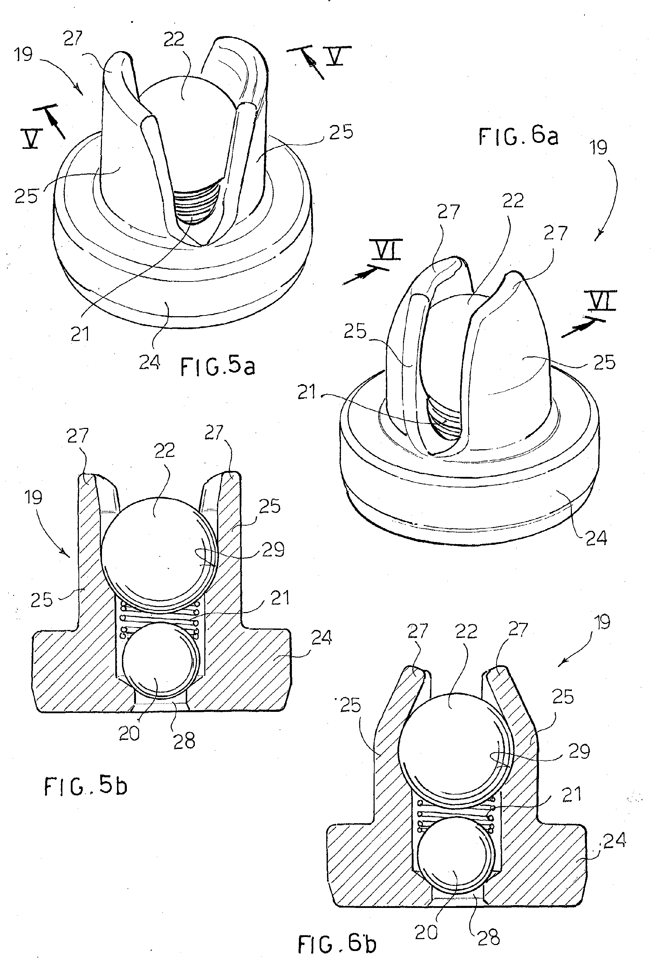

Figure 5a is a perspective view of a second embodiment of a valve 19 according to the invention, during assembly, which differs from that illustrated in Figure 3 essentially in that the side wall of the substantially cylindrical body 23 consists of a plurality of sectors 25 distributed uniformly along the base 24 instead of a continuous wall.

Figure 5b is a sectional view of the valve of Figure 5a, taken along the plane of section V-V of Figure 5a.

Figure 6a is a perspective view of the valve of Figure 5a assembled; Figure 6b is a sectional view of the valve of Figure 6a, taken along the plane of section VI-VI of Figure 6a.

In the embodiment illustrated in Figures 5 and 6 the valve 19 comprises two sectors 25 but, without departing from the scope of the invention, the side wall of the substantially cylindrical body 23 can comprise three or more equal sectors 25 distributed evenly along the base 24.

A hydraulic tensioner comprising a check valve according to the present invention also forms subject matter of the present invention.

The valve according to the invention allows the pre-established objects to be achieved in full.

In fact, the first and second ball have very small working tolerances - of the order of a few microns - as do the seats, which can be obtained with a single punch, wherein the two balls are housed: consequently, the opening and closing stroke of the valve, that is of the first ball 20, can be kept extremely precise.

The cylindrical body 23 is advantageously obtained by turning: this fact, together with the fact that the spring 21 acts between two balls (20, 22) which by their nature are very strong elements, confers considerable strength on the valve 19.

The absence of more or less sharp-edged folds eliminates the risks of breakage previously described with reference to valves of the prior art.

Lastly, the second ball 22 can be fixed in the seat 29 only by interference, by interference and folding of the edge 27 of the cylindrical body 23 or only by folding of the edge 27 of the cylindrical body 23, being housed in its seat without interference.

Without departing from the scope of the invention, a person skilled in the art can make all the modifications and improvements to the valve suggested by his experience and by the natural evolution of the art.

## Claims

1. A check valve for a hydraulic chain tensioner comprising a first ball (20) which, under the action of a spring (21), closes an aperture (18) which connects the hydraulic tensioner (10) to a supply of a pressurised fluid, **characterised in that** it further comprises a second ball (22) housed, together with the first ball (20) and the spring (21), in a substantially cylindrical body (23) and blocked therein, the spring (21) being placed between the first and the second ball (20, 22).

2. A check valve as claimed in claim 1, **characterised in that** the second ball (22) has a larger diameter than the first ball (20).

3. A check valve as claimed in claim 1, **characterised in that** the second ball (22) is blocked in the substantially cylindrical body (23) by interference, being press-inserted into a seat (29) formed in the inside surface of the side wall of the substantially cylindrical body (23).

4. A check valve as claimed in claim 1, **characterised in that** the second ball (22) is blocked in the substantially cylindrical body (23) by folding the edges (27) of the substantially cylindrical body (23) over the second ball (22).

5. A check valve as claimed in claim 1, **characterised in that** the substantially cylindrical body (23) comprises a side wall and a cylindrical base (24) wherein the first ball (20) is housed.

6. A check valve as claimed in claim 5, **characterised in that** the side wall of the substantially cylindrical body (23) is a continuous wall.

7. A check valve as claimed in claim 5, **characterised in that** the side wall of the substantially cylindrical body (23) consists of a plurality of sectors (25) evenly distributed along the base (24).

8. A check valve as claimed in claim 1, **characterised in that** the first and second ball (20, 22) are made of ball-bearing steel.

9. A hydraulic tensioner comprising a check valve according to at least one of the preceding claims.
